Europäisches Patentamt

European Patent Office

Office européen des brevets

(11) Veröffentlichungsnummer: **0 147 541**
**A2**

(12) **EUROPÄISCHE PATENTANMELDUNG**

(21) Anmeldenummer: **84111806.0**

(22) Anmeldetag: **03.10.84**

(51) Int. Cl.⁴: **B 01 D 37/00**
**B 01 D 21/01**

(30) Priorität: **08.12.83 DE 3344404**

(43) Veröffentlichungstag der Anmeldung:
**10.07.85 Patentblatt 85/28**

(84) Benannte Vertragsstaaten:
**DE FR GB IT**

(71) Anmelder: **MANNESMANN Aktiengesellschaft**
**Mannesmannufer 2**
**D-4000 Düsseldorf 1(DE)**

(72) Erfinder: **Brüll, Werner**
**Schwalmstrasse 17**
**D-4000 Düsseldorf(DE)**

(72) Erfinder: **Frese, Elmar, Dipl.-Ing.**
**Burgmüllerstrasse 46**
**D-4000 Düsseldorf(DE)**

(54) **Verfahren und Vorrichtung zur Reinigung von Kreislauf-Flüssigkeiten.**

(57) Die Erfindung betrifft ein Verfahren zur Reinigung von Kreislauf-Flüssigkeiten, insbesondere an Maschinen zur Fein- und Feinstbearbeitung, wie z. B. Glasbearbeitung, bei denen sich der umlaufende Kühlschmierstoff für die Werkzeuge mit feinstem Abrieb anreichert. Der Erfindung liegt die Aufgabe zugrunde, die Glasschlammentsorgung so zu verbessern, daß aus Umweltaspekten die Wiederverwendung des Kühlschmiermittels ermöglicht wird und die Entfernung des Schlammes aus dem Kühlschmiermittelsystem mit einfachen Mitteln und geringem Aufwand durchführbar ist. Zur Lösung wird vorgeschlagen, dem durchmischten Kühlschmierstoff ein Flockungsmittel zuzuführen, das die Partikel bindet und zu Flocken aufbereitet zu Boden sinken läßt, um die verdichteten Flocken aus dem Kühlschmierstoff auszufiltern.

Die vorliegende Erfindung betrifft ein Verfahren und eine Vorrichtung zur Durchführung des Verfahrens zur Reinigung von Kreislauf-Flüssigkeiten, insbesondere an Maschinen zur Fein- und Feinstbearbeitung, z. B. zur Glasbearbeitung, zum Gleitschleifen, Schwingschleifen oder dergleichen, bei denen sich der umlaufende Kühlschmierstoff für die Werkzeuge mit feinstem Abrieb anreichert, der sich in dem an oder nahe der Maschine angeordneten Arbeitsbehälter absetzt.

Bekannte Maschinen zur Glasbearbeitung leiten den zum Kühlen, Schmieren und Spänetransport verwendeten Kühlschmierstoff, in der Regel Wasser mit bekannten Zusätzen, in einen Sammelbehälter, in dem sich die beim Bearbeitungsprozeß entstehenden feinsten Partikel absetzen. Diese Sammelbehälter müssen in regelmäßigen Abständen geleert werden, wobei es üblich ist, das angesammelte Wasser als Abwasser abzufördern, um dann den abgesetzten Schlamm ausbringen zu können. Vielfach ist der Schlamm zu einer äußerst festen, mechanisch nur aufwendig entfernbaren Masse erstarrt, so daß der Entsorgungsvorgang nicht nur zeit-, sondern auch arbeitsaufwendig ist.

Der vorliegenden Erfindung liegt die Aufgabe zugrunde, die Glasschlammentsorgung so zu verbessern, daß einerseits aus Umweltaspekten die Wiederverwendung des Kühlschmiermittels ermöglicht wird und andererseits das Entfernen des Schlammes aus dem Kühlschmiermittelsystem mit einfachen Mitteln und geringem Aufwand durchführbar ist.

Zur Lösung der Aufgabe wird erfindungsgemäß ein Verfahren vorgeschlagen, das im Kennzeichen des Anspruchs 1 angegeben ist. Mit diesem Verfahren ist es möglich, den von der Maschine kommenden Kühlschmierstoff entweder direkt oder über eine Überhebestation dem Arbeitsbehälter zuzuführen, in dem die Reaktion von Zeit zu Zeit eingeleitet wird. Die benötigte Zeit ist so kurz, daß sich die ohnehin notwendigen und üblichen Betriebspausen, z. B. Mittagszeit, Schichtwechsel etc. ausnutzen lassen, um die Entsorgung des Schlammes aus dem Arbeitsbehälter durchzuführen. Der saubere Kühlschmierstoff wird nach der Abscheidung der Flocken wieder als Kreislauf-Flüssigkeit verwendet, so daß ein Ablassen der Flüssigkeit als Abwasser mit der einhergehenden Verschmutzung unterbleibt.

Eine Vorrichtung zur Durchführung des Verfahrens zur Glasschlammentsorgung ist dadurch gekennzeichnet, daß der Arbeitsbehälter als Reaktionsgefäß ausgebildet ist und eine Dosierstation für ein flüssiges und/oder trockenes Flockungsmittel bzw. Filterhilfsmittel sowie ein Rührwerk und eine Systempumpe enthält und daß dem Reaktionsgefäß eine Filteranlage zum Trennen der Flocken vom Kühlschmierstoff zugeordnet · ist. Durch die Verwendung des jeder Maschine oder Maschinengruppe zugeordneten Arbeitsbehälters als Reaktionsgefäß entfällt der bisher übliche Platzbedarf für mehrfach angeordnete Sammelbehälter, so daß eine relativ klein bauende, kompakte Einheit für die Entsorgung von Schlamm geschaffen wird, die der Maschine beigeordnet ist. Das Rührwerk zum homogenen Durchmischen der mit Abrieb angereicherten Flüssigkeit und die Dosierstationen für das Flockungsmittel sind unmittelbar dem Arbeits- bzw. Reaktionsgefäß beigeordnet, das auch die Systempumpe zum Umwälzen des Kühlschmiermittels enthält. Die Filteranlage, mit der die verdichteten Flocken vom Kühlschmiermittel getrennt werden, kann ebenfalls dem Arbeitsbehälter beigeordnet werden, so daß infolge der vorgesehenen Verfahrensschritte und der Bauanordnung die Reaktionszeit zwischen Sammeln und Ausfiltern der Glasrückstände auf ein Minimum reduziert werden. Wenn die Arbeitspausen an der Maschine genutzt werden, braucht keine zusätzliche Zeit für den Entsorgungsvorgang zur Verfügung gestellt zu werden.

Nach einem anderen Vorschlag der Erfindung ist vorgesehen, die Filteranlage als unterhalb des Reaktionsgefäßes angeordneten Unterdruckfilter auszubilden, dem die Flocken über ein Ventil am Boden des Reaktionsgefäßes zuführbar sind.

Ein Ausführungsbeispiel der Erfindung ist in der Zeichnung schematisch dargestellt und wird nachfolgend beschrieben. Es zeigt:

Fig. 1     eine erfindungsgemäße Vorrichtung zur Glasschlammentsorgung in der Ansicht und

Fig. 2     eine Draufsicht auf die Vorrichtung nach Figur 1.

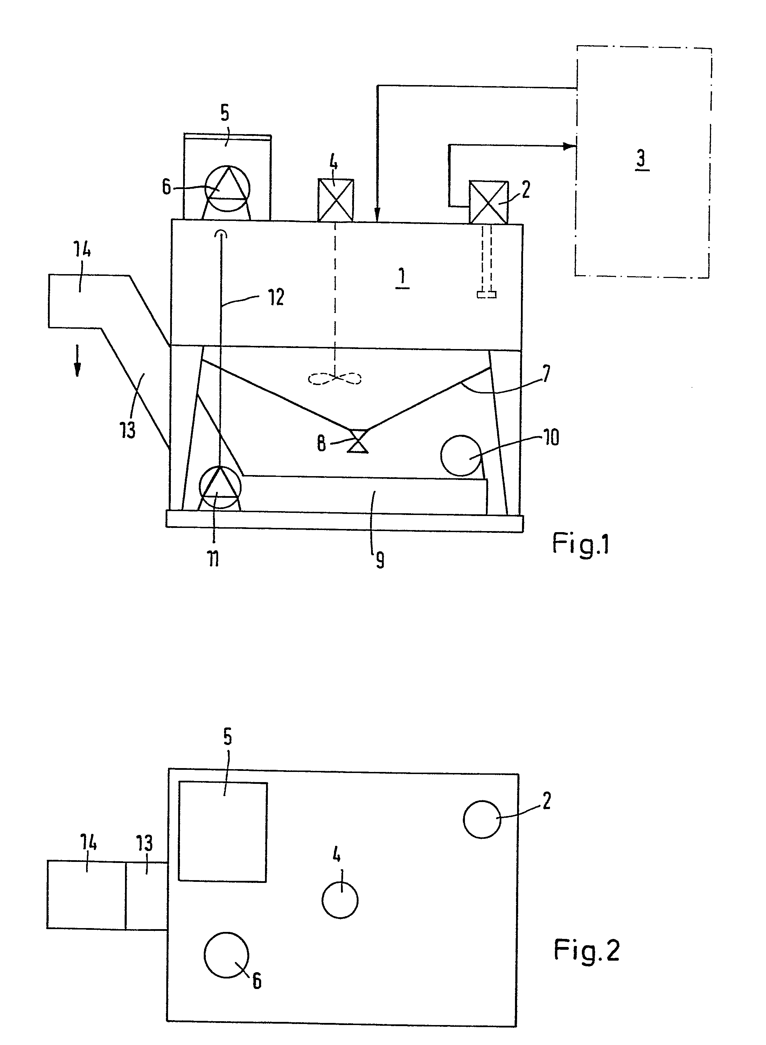

In Fig. 1 ist mit 1 der als Reaktionsgefäß dienende Arbeitsbehälter beziffert, der über die Systempumpe 2 mit der Bearbeitungsmaschine, die bei 3 angedeutet ist, im Kreislauf verbunden ist. Auf dem Behälter 1 ist außerdem ein Rührwerk 4 in den Reaktionsbehälter 1 hineinreichend angeordnet, sowie ein Trockendosierer 5 und ein Flüssigdosierer 6. Der Boden des Reaktionsgefäßes ist wie bei 7 dargestellt trichterförmig nach unten geneigt ausgebildet, wobei an der tiefsten Stelle des Behälters 1 ein Füllventil 8 oberhalb des Unterdruckfilters 9 vorgesehen ist. Der Unterdruckfilter 9 ist in bekannter Weise mit einem bandförmigen Faserflies (bei 10 angedeutet) als Filtermittel bedeckt, das auf einer Rolle aufgewickelt ist. Von dem Unterdruckfilter 9 führt eine Filterpumpe 11 dem nach der Ausfiltrierung zurückgewonnene Kühlschmierstoff über die Leitung 12 in den Behälter 1 zurück. Der Unterdruckfilter transportiert über seine Austragschräge 13 (beispielsweise mit einem nicht dargestellten Kratzerförderer) den ausgefilterten Schlamm schräg nach oben, vorzugsweise zeitverzögert nach dem nächstfolgenden Filtervorgang, damit der Schlamm zwischenzeitlich austrocknet. Der nach oben geförderte Schlamm wird am Ende der Austragschräge bei 14 in einen bereitstehenden Behälter abgeworfen.

In Fig. 2 ist die Anordnung der vorstehend beschriebenen Bauteile in der Draufsicht nochmals dargestellt, wobei die gleichen Positionsziffern verwendet werden.

Nachfolgend wird die Funktionsweise der Vorrichtung beschrieben:

Der von der Maschine 3 kommende Kühlschmierstoff wird über das Leitungssystem zwischen Maschine 3 und Reaktionsgefäß 1 letzterem zugeführt. Das Reaktionsgefäß 1 entspricht dem herkömmlichen Arbeitsbehälter jeder Maschine. Sobald eine Betriebspause an der Maschine 3 eintritt, z. B. Mittagszeit oder Schichtwechsel, wird durch Betätigung einer (nicht dargestellten) Taste die Systempumpe 2 abgeschaltet. Gleichzeitig laufen die Antriebe des Rührwerkes 3, des Trockendosierers 5 und des Flüssigdosierers 6 an. Zeitgesteuert werden vorbestimmte Mengen eines flüssigen und pulverigen Flockungsmittel dem Kühlschmiermittel dem Reaktionsgefäß 1 zugegeben. Das Rührwerk 4 sorgt für eine homogene Mischung. Nach Ablauf des Dosiervorganges läuft das Rührwerk zeitverzögert weiter. Nach dessen Stillstand beginnt die Sedimentationszeit. In dieser Zeit sinken die zu Flocken aufbereiteten Partikel auf den Behälterboden 7, von wo sie sich infolge der trichterartigen Neigung nach unten bewegen und nach hinreichender Verdichtung über das Membranventil 8 abgelassen werden. Der noch feuchte Schlamm wird dem darunter angeordneten Unterdruckfilter 9 zugeführt, wonach das Membranventil 8 zeitgesteuert wieder geschlossen wird. Die Filterpumpe 11 läuft an und saugt den Kühlschmierstoff durch das Filtermittel 10, das die Flocken zurückhält. Das Filtrat wird über die Leitung 12 in das Reaktionsgefäß 1 zurückgeführt.

Die Verschmutzung auf dem Filtermittel 10 bewirkt einen Unterdruck, dessen Meßwert für den automatischen Austrag genutzt wird. Bei Erreichen eines vorgewählten Unterdruckes am Kontaktvakuummeter wird der Unterdruck gebrochen und zeitverzögert läuft der Kratzerförderer an, der den ausgefilterten Schlamm mit dem Filtermittel ein kleines Stück vorschiebt. Gleichzeitig wird von der Rolle ein Teilstück frisches Filtermittel 10 nachgezogen. Ein neuer Filtrationszyklus beginnt. Auf diese Weise läßt sich der gesamte Schlamm von dem Kühlschmierstoff trennen und vorgetrocktet austragen.

23 138 Pa/Gß — 5 — 1. 12. 1983 0147541

Sobald die Filterpumpe 11 den Unterdruckfilter 9 leergesaugt hat, läuft ein Kratzerförderer an, der das verschmutzte Filtermittel auf die Austrageschräge 13 transportiert. Hier kann der Schlamm über Stunden trocknen; er wird erst beim nächsten Reinigungsvorgang abgeworfen. Gleichzeitig kann der Filterboden des Unterdruckfilters 9 mit frischem Filtermittel 10 belegt werden. Der Filter ist somit für die nächste Reinigungsphase vorbereitet.

. . . . . . . . .

Mannesmann Aktiengesellschaft
Mannesmannufer 2
4000 Düsseldorf

1. 12. 1983
23 138 Pa/Gß

---

Verfahren und Vorrichtung zur Reinigung von Kreislauf-Flüssigkeiten

---

Patentansprüche

---

1. Verfahren zur Reinigung von Kreislauf-Flüssigkeiten, insbesondere an Maschinen zur Fein- und Feinstbearbeitung, z. B. zur Glasbearbeitung, zum Gleitschleifen, Schwingschleifen oder dergleichen, bei denen sich der umlaufende Kühlschmierstoff für die Werkzeuge mit feinstem Abrieb anreichert, der sich in dem an oder nahe der Maschine angeordneten Arbeitsbehälter absetzt,
dadurch gekennzeichnet,
daß nach Abschalten des Kühlschmierstoffkreislaufes dem Arbeitsbehälter unter gleichzeitiger Durchmischung des Kühlschmierstoffes ein Flockungsmittel zugeführt wird, das die Partikel bindet und zu Flokken aufbereitet zu Boden sinken läßt und die verdichteten Flocken aus dem Kühlschmierstoff ausgefiltert werden.

2. Vorrichtung zur Durchführung des Verfahrens nach Anspruch 1,
   dadurch gekennzeichnet,
   daß der Arbeitsbehälter als Reaktionsgefäß (1) ausgebildet ist und
   eine Dosierstation für ein flüssiges (6) und/oder trockenes Flokkungsmittel bzw. Filterhilfsmittel (5) sowie ein Rührwerk (4) und
   eine Systempumpe (2) enthält, und daß dem Reaktionsgefäß (1) eine
   Filteranlage (9) zum Trennen der Flocken vom Kühlschmierstoff zugeordnet ist.

3. Vorrichtung nach Anspruch 2,
   dadurch gekennzeichnet,
   daß die Filteranlage (9) als unterhalb des Reaktionsgefäßes (1) angeordneter Unterdruckfilter ausgebildet ist, dem die Flocken über
   ein Ventil (8) am Boden des Reaktionsgefäßes (1) zuführbar sind.

Fig.1

Fig.2